# EUROPEAN PATENT APPLICATION

(11) **EP 4 333 015 A1**
(43) Date of publication of application: **06.03.2024**
(21) Application number: 22862809.5
(22) Date of filing: 17.06.2022
(51) Int. Cl.: H01H 47/32, B60L 50/60

(54) **LOW-VOLTAGE POWER SUPPLY SYSTEM AND VEHICLE HAVING SAME**

(30) Priority: 28.08.2021 CN 202122068389 U
(71) Applicant: BYD Company Limited, Shenzhen, Guangdong 518118 (CN)
(72) Inventor: GUO, Caifang, Shenzhen, Guangdong 518118 (CN); QI, Axi, Shenzhen, Guangdong 518118 (CN); LIU, Jian, Shenzhen, Guangdong 518118 (CN); GAO, Jian, Shenzhen, Guangdong 518118 (CN); LI, Lele, Shenzhen, Guangdong 518118 (CN)
(74) Representative: DehnsGermany Partnerschaft von Patentanwälten
(86) International application number: PCT/CN2022/099424
(87) International publication number: WO 2023/029668

(57) **Abstract**

The present disclosure discloses a low-voltage power supply system and a vehicle having same. The low-voltage power supply system includes: a storage battery; an electric control board, the electric control board being connected with the storage battery, at least a battery management controller (BMC) module and a motor control module being integrated in the electric control board, and the motor control module being configured to control a power module; a control circuit, the control circuit being connected with the BMC module and being configured to receive a control command of the BMC module; a metal-oxide-semiconductor field-effect transistor (MOSFET), connected with the control circuit; and a battery management system, a contactor being arranged in the battery management system, the MOSFET being connected with the contactor and being mounted to the electric control board or the battery management system, and the BMC module being configured to control on/off of the MOSFET through the control circuit, to implement connection/disconnection between the storage battery and the contactor.

## Description

### CROSS-REFERENCE TO RELATED APPLICATIONS

The present disclosure claims priority of Chinese Patent Application No. 202122068389.1, filed on August 28, 2021 and entitled "LOW-VOLTAGE POWER SUPPLY SYSTEM AND VEHICLE HAVING SAME". The entire content of the above-referenced application is incorporated herein by reference.

### FIELD

The present disclosure relates to the field of vehicles, and more specifically, to a low-voltage power supply system and a vehicle having same.

### BACKGROUND

A low-voltage power supply system in the related art usually includes a storage battery and a low-voltage distribution box. A relay is arranged in the low-voltage distribution box to control on/off of a circuit, resulting in a relatively complex structure and a relatively large volume of the low-voltage power supply system. This causes inconvenience in arrangement.

### SUMMARY

The present disclosure is intended to resolve at least one of the technical problems in the related art. Apurpose of the present disclosure is to provide a low-voltage power supply system, which has advantages such as a higher integration and a small volume.

The present disclosure further provides a vehicle having the low-voltage power supply system.

In order to achieve the above purpose, an embodiment of a first aspect of the present disclosure provides a low-voltage power supply system, which includes: a storage battery; an electric control board, the electric control board being connected with the storage battery, at least a battery management controller (BMC) module and a motor control module being integrated in the electric control board, and the motor control module being configured to control a power module; a control circuit, the control circuit being connected with the BMC module and being configured to receive a control command of the BMC module; a metal-oxide-semiconductor field-effect transistor (MOSFET), connected with the control circuit; and a battery management system, a contactor being arranged in the battery management system, the MOSFET being connected with the contactor and being mounted to the electric control board or the battery management system, and the BMC module being configured to control on/off of the MOSFET through the control circuit, to implement connection/disconnection between the storage battery and the contactor.

The low-voltage power supply system in this embodiment of the present disclosure has advantages such as a higher integration and a small volume.

According to some embodiments of the present disclosure, a processor is further arranged on the battery management system. The processor is connected with the contactor. The processor is configured to control the contactor to be closed or opened.

According to some embodiments of the present disclosure, the control circuit and the MOSFET are both integrated in the electric control board. A vehicle control module is integrated in the electric control board.

According to some embodiments of the present disclosure, the low-voltage power supply system further includes: an on-board charger (OBC) module, one end of the OBC module being connected with a charging port, and the other end being connected with a power battery; a DC module, one end of the DC module being connected with the OBC module and the power battery, and the other end being connected with the storage battery; a high-voltage distribution module, one end of the high-voltage distribution module being connected with the power battery, and the other end of the high-voltage distribution module being connected with a high-voltage device; and an electric control box, including an upper cavity and a lower cavity, the high-voltage distribution module, the electric control board, and the power module being arranged in the upper cavity, and the OBC module and the DC module being arranged in the lower cavity.

According to some embodiments of the present disclosure, the low-voltage power supply system further includes a low-voltage distribution box. Two fuses are arranged in the low-voltage distribution box. The storage battery is connected with the DC module through one of the fuses and is connected with the MOSFET, the electric control board, and the OBC module through the other fuse.

According to some embodiments of the present disclosure, the low-voltage power supply system further includes a motor and a reducer. The motor is connected with the reducer. The motor and the reducer are arranged side by side under the electric control box. The power module is connected with the motor. The power module is configured to drive the motor.

According to some embodiments of the present disclosure, the storage battery is integrated in the electric control box.

According to some embodiments of the present disclosure, the low-voltage power supply system further includes a control circuit board. The control circuit is mounted to the control circuit board. The MOSFET is integrated in the battery management system.

According to some embodiments of the present disclosure, the control circuit and the MOSFET are both integrated in the battery management system. The storage battery is integrated in the electric control box.

According to an embodiment of a second aspect of the present disclosure, a vehicle is provided. The vehicle includes the low-voltage power supply system in the embodiment of the first aspect of the present disclosure.

In the vehicle in the embodiment of the second aspect of the present disclosure, the low-voltage power supply system in the embodiment of the first aspect of the present disclosure is used, which realizes advantages such as a higher integration and a small volume.

Additional aspects and advantages of the present disclosure will be given in the following description, some of which will become apparent from the following description or may be learned from practices of the present disclosure.

### BRIEF DESCRIPTION OF THE DRAWINGS

The above and/or additional aspects and advantages of the present disclosure will become apparent and comprehensible from the following descriptions of embodiments made with reference to the following drawings.
FIG. 1 is a schematic structural diagram of a metal-oxide-semiconductor field-effect transistor (MOSFET) of a low-voltage power supply system mounted to an electric control board according to an embodiment of the present disclosure.
FIG. 2 is a schematic structural diagram of a MOSFET of a low-voltage power supply system mounted to an electric control board according to another embodiment of the present disclosure.
FIG. 3 is a schematic structural diagram of a MOSFET of a low-voltage power supply system mounted to a high-voltage control board according to an embodiment of the present disclosure.
FIG. 4 is a schematic structural diagram of a MOSFET of a low-voltage power supply system mounted to a high-voltage control board according to another embodiment of the present disclosure.

Reference Numerals:
Low-voltage power supply system 1,
Storage battery 100, Electric control board 200,
Battery management system 300, Processor 310, Contactor 321,
MOSFET 400, Control circuit 500,
Control circuit board 600, DC/DC converter 700,
DC module 810, Fuse 820, Low-voltage distribution box 830, OBC module 840,
Electric control box 900, Motor 910, Reducer 920, High-voltage distribution module 930.

### DETAILED DESCRIPTION

Embodiments of the present disclosure are described in detail below, and examples of the embodiments are shown in the drawings, where the same or similar elements or elements having the same or similar functions are represented by the same or similar reference numerals throughout the description. The embodiments described below with reference to the drawings are exemplary, and are merely intended to explain the present disclosure and cannot be construed as a limitation on the present disclosure.

In the description of the present disclosure, it is to be understood that orientation or position relationships indicted by terms such as "center", "longitudinal", "transverse", "length", "width", "thickness", "upper", "lower", "front", "rear", "left", "right", "vertical", "horizontal", "top", "bottom", "interior", "exterior", "axial", and "circumferential" are based on orientation or position relationships shown in the drawings, are merely used to facilitate the description of the present disclosure and simplify the description, instead of indicating or implying that the indicated apparatus or element needs to have particular orientations or be constructed and operated in particular orientations, and therefore cannot be construed as a limitation on the present disclosure.

In the description of the present disclosure, "first feature" or "second feature" may include one or more features.

In the description of the present disclosure, "multiple" means two or more, and "several" means one or more.

A low-voltage power supply system 1 in the embodiments of the present disclosure is described with reference to the drawings.

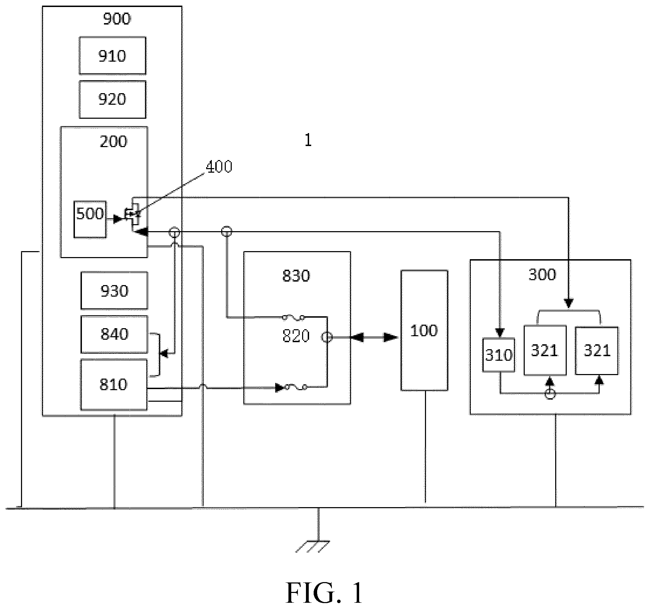

As shown in FIG. 1 to FIG. 4, the low-voltage power supply system 1 in the embodiments of the present disclosure includes a storage battery 100, an electric control board 200, a control circuit 500, a battery management system 300, and a metal oxide semiconductor field effect transistor (MOSFET) 400.

The electric control board 200 is connected with the storage battery 100. At least a battery management controller (BMC) module and a motor control module are integrated in the electric control board 200. The motor control module is configured to control a power module. The control circuit 500 is connected with the BMC module. The control circuit 500 is configured to receive a control command of the BMC module. The MOSFET 400 is connected with the control circuit 500. A contactor 321 is arranged in the battery management system 300. The MOSFET 400 is connected with the contactor 321 and is mounted to the electric control board 200 or the battery management system 300. The BMC module is configured to control on/off of the MOSFET 400 through the control circuit 500, to implement connection/disconnection between the storage battery 100 and the contactor 321.

It should be noted that, since supply of power to the BMC module by the storage battery 100 is controllable, the BMC module may have a sleep function. The BMC module consumes little battery power of the storage battery 100 when the BMC module is in a sleep state. In addition, the contactor 321 may be a main positive contactor 321, a main negative contactor 321, a pre-charging contactor 321, or the like.

In the low-voltage power supply system 1 in the embodiments of the present disclosure, the electric control board 200 may be connected with the storage battery 100 through integration of the BMC module into the electric control board 200. The BMC module controls the MOSFET through the control circuit, to implement controllable supply of power to the contactor. Therefore, a chip for accommodating the BMC module does not need to be arranged in the battery management system, which reduces a number of required chips, and reduces costs.

In addition, the contactor 321 is mounted to the BMC module, the storage battery 100 may supply power to the contactor 321 through the MOSFET 400, and the BMC module controls on/off of the MOSFET 400 through the control circuit 500. When an abnormality occurs in a vehicle (for example, the vehicle encounters a collision), the BMC module may collect the abnormality signal from the vehicle, and control the MOSFET 400 to be disconnected, so as to disconnect the contactor 321, thereby cutting off the high-voltage power supply of the whole vehicle. This avoids spontaneous combustion of the vehicle caused by a short circuit of the high-voltage power output, or prevents impact on safety of a driver and a passenger as a result of leakage of the high-voltage power, thereby improving safety of the vehicle.

In addition, the MOSFET 400 is mounted to the electric control board 200 or the battery management system 300. Compared with a low-voltage power supply system in the related art in which a relay is arranged to control connection/disconnection between the storage battery and the contactor, in the low-voltage power supply system 1 in the embodiments of the present disclosure, the MOSFET 400 is used to control connection/disconnection between the storage battery 100 and the contactor 321. Since a volume of the MOSFET 400 is much less than that of the relay, the MOSFET 400 may be mounted to the circuit board, which avoids significant increase of vibration and noise of the circuit board and reduces costs. In this way, not only an integration of the low-voltage power supply system 1 is increased, reliability of electrical connection is ensured, and an overall conductor length of the low-voltage power supply system 1 is reduced, but also the relay and a safety device (for example, a fuse 820) connected between the relay and the electric control board 200 may be omitted, thereby reducing the volume of the low-voltage power supply system 1, that is, an assembly space of low-voltage power supply system 1 is reduced, thereby facilitating arrangement of the low-voltage power supply system 1. Moreover, since the volume of the low-voltage power supply system 1 is reduced, a vibration amplitude and noise of the low-voltage power supply system 1 during vehicle travelling can be reduced, which improves the reliability of the electrical connection.

Therefore, the low-voltage power supply system 1 in the embodiments of the present disclosure has advantages such as a higher integration, a small volume and vibration amplitude, and reliable electrical connection.

According to some specific embodiments of the present disclosure, as shown in FIG. 1 to FIG. 4, a processor 310 is further arranged on the battery management system 300. The processor 310 is connected with the contactor 321. The processor 310 is configured to control the contactor 321 to be closed or opened.

When an abnormality (for example, a collision) occurs on the vehicle, the processor 310 may control the contactor 321 to be disconnected, and the BMC module may control the MOSFET 400 to be disconnected through the control circuit 500. The above two manners can both prevent high-voltage output at an output terminal of the contactor 321, thereby cutting off the high-voltage power of the whole vehicle. Through the arrangement of the dual mechanism, the safety of the vehicle is significantly improved.

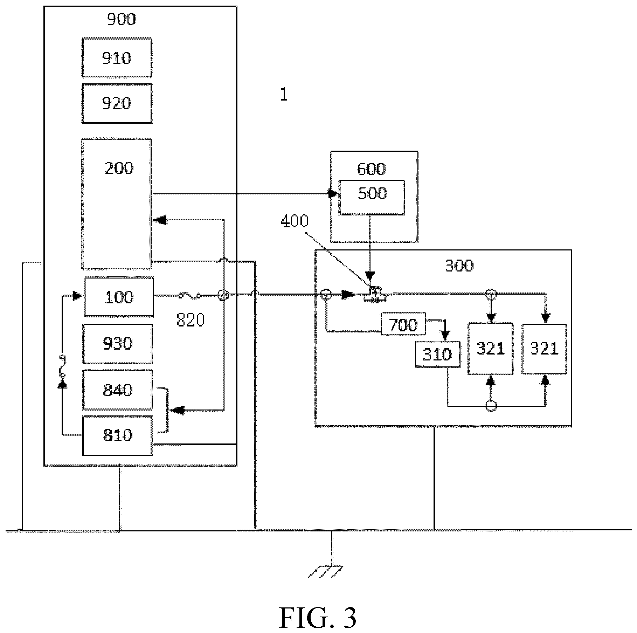

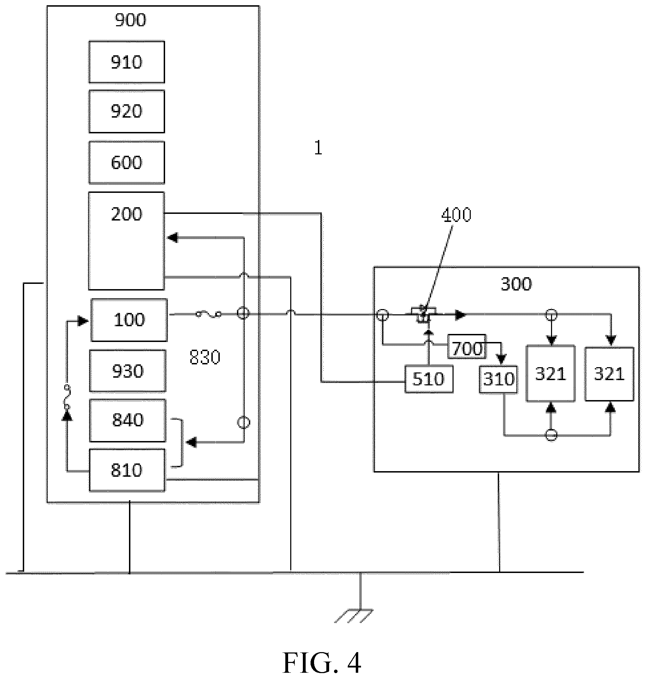

According to some specific embodiments of the present disclosure, as shown in FIG. 3 and FIG. 4, a DC/DC converter 700 is connected between the storage battery 100 and the processor 310.

It should be noted that, an input voltage of the processor 310 is generally 1.9 V, 3.3 V, or 5 V, an output voltage of the storage battery 100 is in a range of 9 V to 16 V, and an output voltage of the storage battery 100 is generally 13.6 V Therefore, the output voltage of the storage battery 100 is much greater than the input voltage of the processor 310. Through the DC/DC converter 700, a direct current voltage outputted by the storage battery 100 may be converted into a smaller direct current voltage. The smaller direct current voltage matches the input voltage of the processor 310, and may directly supply power to the processor 310, thereby protecting the processor 310 from damage.

According to some specific embodiments of the present disclosure, as shown in FIG. 1 to FIG. 4, the control circuit 500 and the MOSFET 400 are both integrated in the electric control board 200, and a vehicle control module is further integrated in the electric control board 200. In this way, a control command outputted by the BMC module to the control circuit 500 can be transmitted more stably, and the signal is more reliable. Moreover, the integration of the electric control board 200 is increased, which reduces a number of conductors.

Specifically, the electric control board includes a first core and a second core. The first core is configured to integrate the motor control module. The second core is configured to integrate the vehicle control module and the BMC module.

In addition, the MOSFET 400 is directly controlled through the BMC module, which can significantly reduce a control failure rate of the vehicle. For example, in the related art, the BMC module outputs a control command to a control circuit board 600, and the control circuit board 600 controls the relay to control the on/off of the contactor. Therefore, two control boards are involved. It is assumed that a failure rate of the BMC module is 10%, and a failure rate of the control circuit board 600 is 10%. Through control of the MOSFET 400 through the control circuit board 600, an overall failure rate of the low-voltage power supply system 1 is 1-(1-10%)*(1-10%)=19%. However, in the present disclosure, the MOSFET 400 is directly controlled through the BMC module, and thus the overall failure rate of the low-voltage power supply system 1 is 10%. That is to say, the overall failure rate of the low-voltage power supply system 1 is significantly reduced, thereby significantly improving control reliability of the vehicle.

According to some embodiments of the present disclosure, as shown in FIG. 1 to FIG. 4, the low-voltage power supply system 1 further includes an on-board charger (OBC) module 840, a DC module 810, a high-voltage distribution module 930, and an electric control box 900.

One end of the OBC module 840 is connected with a charging port. The other end is connected with a power battery. One end of the DC module 810 is connected with the OBC module 840 and the power battery. The other end is connected with the storage battery 100. One end of the high-voltage distribution module 930 is connected with the power battery. The other end of the high-voltage distribution module is connected with a high-voltage device. The electric control box 900 includes an upper cavity and a lower cavity. The high-voltage distribution module 930, the electric control board 200, and the power module are arranged in the upper cavity. The OBC module 840 and the DC module 810 are arranged in the lower cavity.

The OBC module 840 is an on-board charger, and an external power supply (for example, a charging pile) may charge the power battery through the OBC module 840. The DC module 810 may be a DC/DC converter to convert a voltage of the power battery into a voltage in a range of 9 V to 16 V, to charge the storage battery 100. The high-voltage device may be an on-board air conditioner. The power battery supplies power to the high-voltage device through the high-voltage distribution module 930.

For example, the upper cavity may be divided into two layers. The electric control board 200 and the high-voltage distribution module 930 are separated from the power module, and the electric control board 200 and the high-voltage distribution module 930 are located above the power module. In this way, signal control of the electric control board 200 and the high-voltage distribution module 930 can be prevented from being affected by the power module.

According to some embodiments of the present disclosure, as shown in FIG. 1, the low-voltage power supply system 1 further includes a low-voltage distribution box 830.

Two fuses 820 are arranged in the low-voltage distribution box 830. The storage battery 100 is connected with the DC module 810 through one of the fuses 820 and is connected with the MOSFET, the electric control board, and the OBC module through the other fuse.

In case of a circuit failure (for example, a voltage overload, a current overload, or a short circuit), the two fuses 820 may disconnect the storage battery 100 from the DC module 810, that is, cut off the connection between the storage battery 100 and the power battery, thereby protecting the storage battery 100, the DC module 810, and the power battery from damage. In addition, the two fuses may cut off the electrical connection between the storage battery 100 and the electric control board 200 and the OBC module, thereby protecting the storage battery 100, the electric control board 200, and the OBC module from damage.

In addition, the low-voltage distribution box 830 may provide arrangement support and protection for the two fuses 820, and may further reduce a number of fuses 820.

According to some embodiments of the present disclosure, as shown in FIG. 1 to FIG. 4, the low-voltage power supply system 1 further includes a motor 910 and a reducer 920. The motor 910 is connected with the reducer 920. The motor 910 and the reducer 920 are connected and arranged side by side under the electric control box 900. The power module is connected with the motor. The power module is configured to drive the motor. The motor 910 and the reducer 920 may be arranged coaxially. In this way, the volume of the low-voltage power supply system 1 is reduced, and a length of a conductor connecting the electric control box 900 to the motor 910 and the reducer 920 may be reduced, which improves stability of the control signal.

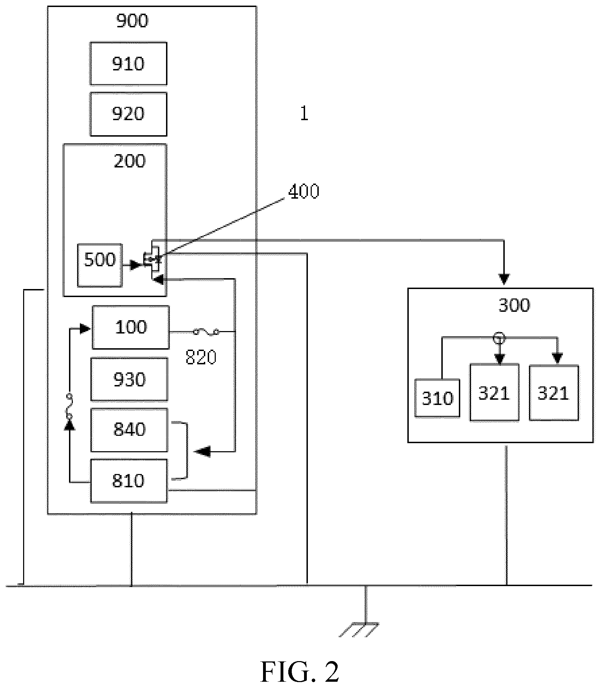

According to some embodiments of the present disclosure, as shown in FIG. 2 to FIG. 4, the storage battery 100 is integrated in the electric control box 900, so that the electric control box 900 may protect the storage battery 100, the length of the conductor may be reduced. In this case, the fuse 820 is located in the electric control box 900, and the low-voltage distribution box 830 does not need to be arranged, which further reduces vehicle components, reduces the assembly space required for the low-voltage power supply system 1, and simplifies circuit arrangement.

In still other embodiments of the present disclosure, as shown in FIG. 2, the low-voltage power supply system 1 further includes the control circuit board 600. The control circuit board 600 may be a body control module (BCM).

The control circuit 500 is mounted to the control circuit board 600. The MOSFET 400 is integrated in the battery management system 300. The control circuit board 600 and the BMC module communicate with each other. For example, the BMC module causes the BCM to send a control command to the MOSFET 400 through a CAN packet. In this way, more diverse arrangements of the control circuit board 600 and the MOSFET 400 are realized, while volumes of the battery management system 300 and the electric control board 200 are not increased.

According to some specific embodiments of the present disclosure, as shown in FIG. 2 to FIG. 4, the control circuit 500 and the MOSFET 400 are both integrated in the battery management system 300. The battery management system 300 and the BMC module may transmit a signal to each other. The BMC module sends a control command to the control circuit 500 through the processor 310, to control the on/off of the MOSFET 400. In this way, an integration of the battery management system 300 is increased, lines and wiring ports may be omitted, and more diverse arrangements the control circuit 500 and the MOSFET 400 are realized.

In addition, the storage battery 100 is integrated in the electric control box 900, so that the electric control box 900 may protect the storage battery 100, the length of the conductor may be reduced. In this case, the fuse 820 is located in the electric control box 900, and the low-voltage distribution box 830 does not need to be arranged, which further reduces vehicle components, reduces the assembly space required for the low-voltage power supply system 1, and simplifies circuit arrangement.

A vehicle in the embodiments of the present disclosure is described below with reference to drawings. The vehicle includes the above low-voltage power supply system 1 in the embodiments of the present disclosure.

The vehicle in the embodiments of the present disclosure has advantages such as a higher integration, a small volume and vibration amplitude, and reliable electrical connection through utilization of the above low-voltage power supply system 1 in the embodiments of the present disclosure.

Other compositions and operations of the low-voltage power supply system 1 in the embodiments of the present disclosure and the vehicle having same are known to a person of ordinary skill in the art, and therefore are not described herein in detail.

In the description of the specification, the description of reference terms such as "specific embodiments" or "specific examples" means that specific features, structures, materials, or characteristics described in combination with the embodiment or example are included in at least one embodiment or example of the present disclosure. In this specification, exemplary descriptions of the above terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A low-voltage power supply system, comprising:
a storage battery;
an electric control board, the electric control board being connected with the storage battery, at least a battery management controller (BMC) module and a motor control module being integrated in the electric control board, and the motor control module being configured to control a power module;
a control circuit, the control circuit being connected with the BMC module and being configured to receive a control command of the BMC module;
a metal-oxide-semiconductor field-effect transistor (MOSFET), connected with the control circuit; and
a battery management system, a contactor being arranged in the battery management system, the MOSFET being connected with the contactor and being mounted to the electric control board or the battery management system, and the BMC module being configured to control on/off of the MOSFET through the control circuit, to implement connection/disconnection between the storage battery and the contactor.

2. The low-voltage power supply system according to claim 1, wherein a processor is further arranged on the battery management system; the processor is connected with the contactor; and the processor is configured to control the contactor to be closed or opened.

3. The low-voltage power supply system according to claim 1 or 2, wherein the control circuit and the MOSFET are both integrated in the electric control board; and
a vehicle control module is integrated in the electric control board.

4. The low-voltage power supply system according to any of claims 1 to 3, further comprising:
an on-board charger (OBC) module, one end of the OBC module being connected with a charging port, and the other end being connected with a power battery;
a DC module, one end of the DC module being connected with the OBC module and the power battery, and the other end being connected with the storage battery;
a high-voltage distribution module, one end of the high-voltage distribution module being connected with the power battery, and the other end of the high-voltage distribution module being connected with a high-voltage device; and
an electric control box, comprising an upper cavity and a lower cavity, the high-voltage distribution module, the electric control board, and the power module being arranged in the upper cavity, and the OBC module and the DC module being arranged in the lower cavity.

5. The low-voltage power supply system according to any of claims 1 to 4, further comprising:
a low-voltage distribution box, two fuses being arranged in the low-voltage distribution box, and the storage battery being connected with the DC module through one of the fuses and being connected with the MOSFET, the electric control board, and the OBC module through the other fuse.

6. The low-voltage power supply system according to any of claims 1 to 5, further comprising:
a motor and a reducer, the motor being connected with the reducer, the motor and the reducer being arranged side by side under the electric control box, the power module being connected with the motor, and the power module being configured to drive the motor.

7. The low-voltage power supply system according to any of claims 1 to 6, wherein the storage battery is integrated in the electric control box.

8. The low-voltage power supply system according to any of claims 1 to 7, further comprising:
a control circuit board, the control circuit being mounted to the control circuit board, and the MOSFET being integrated in the battery management system.

9. The low-voltage power supply system according to any of claims 1 to 8, wherein the control circuit and the MOSFET are both integrated in the battery management system; and the storage battery is integrated in the electric control box.

10. A vehicle, comprising the low-voltage power supply system according to any of claims 1 to 9.
